# EUROPÄISCHE PATENTSCHRIFT

(11) **EP 3 808 549 B1**
(45) Veröffentlichungstag und Bekanntmachung des Hinweises auf die Patenterteilung: **09.11.2022**
(21) Anmeldenummer: 20196638.9
(22) Anmeldetag: 17.09.2020
(51) Int. Cl.: B29D 30/06, B29D 30/72

(54) **FAHRZEUGREIFEN AUFWEISEND EINE KONTRASTSTRUKTURFLÄCHE UND VERFAHREN ZUR HERSTELLUNG EINES FORMWERKZEUGS**
VEHICLE TYRE WITH A CONTRASTING STRUCTURE SURFACE AND METHOD OF MAKING A MOULD
PNEUS DE VÉHICULE COMPRENANT UNE SURFACE STRUCTURÉE CONTRASTÉE ET PROCÉDÉ DE FABRICATION D'UN OUTIL DE MOULAGE

(30) Priorität: 14.10.2019 DE 102019215727
(43) Veröffentlichungstag der Anmeldung: 21.04.2021
(73) Patentinhaber: Continental Reifen Deutschland GmbH, 30165 Hannover (DE)
(72) Erfinder: Jurco, Juraj, 30419 Hannover (DE); Rittweger, Stefan, 30419 Hannover (DE)
(74) Vertreter: Continental Corporation

(56) Entgegenhaltungen:
- EP-A1- 2 090 444
- EP-A2- 1 260 387
- JP-A- 2011 037 387

## Beschreibung

Die Erfindung betrifft einen Fahrzeugreifen mit Seitenwänden und einem Laufstreifen und mit zumindest einer Kontraststrukturfläche auf einer äußeren Oberfläche, insbesondere auf einer der Seitenwände und/oder dem Laufstreifen, wobei auf der Kontraststrukturfläche eine Kontraststruktur mit Schraffurrippen jeweils aufweisend einen Grat sowie einander gegenüberliegende Flanken ausgebildet ist.

Derartige Kontraststrukturflächen werden in der Regel im Zuge der Vulkanisation des Reifens mittels einer formgebenden eine Negativkontur der Kontraststrukturfläche aufweisenden Vulkanisationsform in den Reifen geprägt. Eine strukturierte Oberfläche eines bereits vulkanisierten Reifens kann aber auch durch Abtragung, z.B. mittels Gravur, oder durch ein additives Verfahren erreicht werden.

Derartige Kontraststrukturflächen sind bekannt. Auf der Reifenseitenwand und/oder auf dem Laufstreifen werden sie z.B. zur Darstellung einer Markierung genutzt. Eine Markierung kann dabei eine Abbildung, ein Schriftzeichen, einen Firmennamen, ein Firmenlogo, eine Kennzeichnung, einen Code, eine Fläche, etc umfassen. Die Kontraststrukturfläche kann dabei Teil der Markierung sein und/oder diese ganz oder teilweise umgeben.

Die Streuung von Licht an den Flanken der Schraffurrippen verringert die Reflektion des Lichts an der Oberfläche des Reifens, wodurch die Helligkeitswirkung verändert ist. In der Regel wirken dabei mit Schraffurrippen versehene Oberflächenbereiche dunkler als im Wesentlichen glatte, von derartigen Erhebungen freie, Oberflächenbereiche. Somit ist ein Kontrast in der an sich monochromen Oberfläche des Reifens, insbesondere der Seitenwand und/oder des Laufstreifens, ermöglicht. Hierdurch können Darstellungen von Markierungen verbessert sichtbar gemacht werden.

Bekannt ist beispielsweise aus der US 2012 227879 A1 ein Fahrzeugreifen, der auf seiner Seitenwand eine Vielzahl von weitgehend parallel zueinander angeordneten Schraffurrippen zur kontrastreichen Oberflächengestaltung und Hervorhebung einer Markierung aufweist. Nachteilig an derartigen Ausführungsformen ist, dass die Gestaltungsmöglichkeiten gering sind.

Die Patentschrift EP 2 090 444 A1 offenbart die Merkmale des Oberbegriffs des unabhängigen Anspruchs 1.

Aufgabe ist es daher, die Kontrastwirkung noch gezielter zu beeinflussen und die Kontrastwirkung weiter zu verbessern. Zudem soll eine gute Entlüftbarkeit bei der Herstellung des Reifens mittels einer Vulkanisationsform gegeben sein. Weiter soll ein entsprechendes Formwerkzeug einfach herstellbar sein.

Dies wird dadurch erreicht, dass die Kontraststruktur Kreuzungsbereiche aufweist, wobei ein Kreuzungsbereich genau der Bereich ist, in dem eine zweite Schraffurrippe der Schraffurrippen eine erste Schraffurrippe der Schraffurrippen so überlagernd kreuzend angeordnet ist, dass sich der Grat der zweiten Schraffurrippe und der Grat der ersten Schraffurrippe in der Draufsicht kreuzen und dass eine Kontur der zweiten Schraffurrippe innerhalb des Kreuzungsbereichs ein lokales Maximum aufweist.

Es hat sich gezeigt, dass eine Kontraststruktur aufweisend derartige Kreuzungsbereiche besonders geeignet ist, um die Kontrastwirkung zu beeinflussen und zu verbessern.

Die ersten und die zweiten Schraffurrippen weisen jeweils einen Grat sowie zwei einander gegenüberliegende seitlich des Grates angeordnete Flanken auf. Die Flanken können beispielsweise in einem weitgehend spitzen Winkel oder in einem Knick oder in einer Rundung in den Grat übergehen. Entsprechend kann die Rippe oder die Erhebung im Bereich des Grates weitgehend spitz oder abgeflacht oder mit einer Rundung versehen ausgeführt sein.

Die Kontraststruktur weist zumindest eine erste und eine zweite Schraffurrippe auf. Der Bereich, in dem eine zweite Schraffurrippe eine erste Schraffurrippe so überlagert, dass sich die Grate der beiden Schraffurrippen kreuzen und die Kontur der zweiten Schraffurrippe ein lokales Maximum aufweist, ist ein Kreuzungsbereich. Der Grat der einen Schraffurrippe erstreckt sich somit in der Draufsicht beidseits des Grates der jeweils anderen Schraffurrippe des Kreuzungsbereichs.

Durch die gekreuzte Anordnung der Grate und die damit verbundene zueinander gewinkelte Anordnung von Flanken der ersten und zweiten Schraffurrippe ist die Streuung, die Mehrfachreflektion sowie die Absorption von auf die Schraffurrippen fallenden Lichtes verstärkt.

Wesentlich ist weiter, dass im Kreuzungsbereich die zweite Schraffurrippe die erste Schraffurrippe überlagert. Hierdurch weist das Höhenprofil der Kontraststruktur im Kreuzungsbereich eine größere Höhe auf als durch die Höhe der Kontur der ersten Schraffurrippe gegeben ist, wodurch eine stark verbesserte Kontrastwirkung erreichbar ist. Gleichzeitig weist die Kontur der zweiten Schraffurrippe, die im Kreuzungsbereich die Kontur der Kontraststruktur bildet, im Kreuzungsbereich ein lokales Maximum auf. Derartige lokale Maxima im Höhenprofil der Kontraststruktur ermöglichen über zusätzliche Verschattung, Reflexion und/oder Streuung eine besonders starke Beeinflussung und Verbesserung der Kontrastwirkung bei gleichzeitig geringerer Höhe der restlichen Bereiche der Schraffurrippen.

Durch die Kreuzungsbereiche der Kontraststruktur, wobei jeder Kreuzungsbereich ein lokales Maximum aufweist, ist die Kontrastwirkung somit noch gezielter beinflussbar und verbesserbar.

Durch die Verbindung der ersten Schraffurrippe und der zweiten Schraffurrippe in den Kreuzungsbereichen ist auch eine vorteilhafte Entlüftbarkeit der Kontraststrukturfläche im Reifenbau ermöglicht. Weiter stabilisieren sich die Schraffurrippen im Kreuzungsbereich gegenseitig, wodurch die Schraffurrippen resistenter gegen Anscheuerung im Gebrauch des Reifens sind.

Derartige Kontraststrukturen können mittels eines Formwerkzeugs einer Vulkanisationsvorrichtung zum formgebenden Vulkanisieren des Fahrzeugreifens in die Oberfläche, insbesondere in die Seitenwand und/oder den Laufstreifen, des Fahrzeugreifens geprägt werden. Das Formwerkzeug weist dabei auf einer Formoberfläche eine zur Kontraststruktur des Fahrzeugreifens komplementäre Negativkontraststruktur auf. Das Formwerkzeug kann dabei mittels des erfindungsgemäßen Verfahrens auf einfache Art und Weise hergestellt werden.

Zweckmäßig ist es, wenn in zumindest einem der Kreuzungsbereiche die zweite Schraffurrippe einer Kontur der ersten Schraffurrippe weitgehend folgt. Die zweite Schraffurrippe überlagert die Kontur der ersten Schraffurrippe somit raupenartig. Insbesondere überlagert das lokale Maximum den Grat der ersten Schraffurrippe.

Eine vorteilhafte Ausführungsform ist dadurch gegeben, dass in zumindest einem Kreuzungsbereich das lokale Maximum den Grat der ersten Schraffurrippe um eine Überlagerungshöhe von 0,05 mm bis 0,4 mm, bevorzugt 0,1 mm bis 0,4 mm, besonders bevorzugt 0,2 mm bis 0,3 mm, überragt.

Die Überlagerungshöhe ist gemessen senkrecht zur flächigen Erstreckung der Kontraststrukturfläche .

Eine derartige Überlagerungshöhe ermöglicht eine hervorragende Zerklüftung und somit eine deutliche Verbesserung des Kontrastes.

Bereits eine geringe Überlagerungshöhe von 0,05 mm bis 0,1 mm ermöglicht eine vorteilhafte Verbesserung des Kontrastes bei gleichzeitig hoher Beständigkeit der zweiten Schraffurrippe gegenüber Anscheuerung im Gebrauch. Bei einer Überlagerungshöhe von 0,1 mm bis 0,4 mm, bevorzugt 0,2 mm bis 0,3 mm ist über die lokalen Maxima eine besonders gute Kontrastwirkung ermöglicht. Zweckmäßig ist es, wenn mindestens 50% der Kreuzungsbereiche eine derartige Überlagerungshöhe von 0,05 mm bis 0,4 mm aufweisen.

Eine vorteilhafte Ausführungsform ist dadurch gegeben, dass die erste Schraffurrippe und/oder die zweite Schraffurrippe zumindest eines Kreuzungsbereichs außerhalb des Kreuzungsbereichs eine Höhe von 0,1 mm bis 1,0 mm, bevorzugt von 0,2 mm bis 0,8 mm, besonders bevorzugt von 0,25 mm bis 0,5 mm, aufweist.

Die Höhe einer Schraffurrippe kann die außerhalb der Kreuzungsbereiche entlang der Längserstreckung der Schraffurrippe gemittelte Höhe sein. Weist eine Schraffurrippe mehrere Kreuzungsbereiche auf, so kann die Höhe die minimale Höhe zwischen zwei benachbarten Kreuzungsbereichen sein. Höhen können gemessen sein relativ zu einem Niveau, das einem mittleren Niveau des gesamten Schraffurgrundes der Kontraststrukturfläche entspricht. Höhen können auch gemessen sein bezüglich eines Niveaus, das einem Basisniveau entspricht, welches beispielsweise von einem Teil der Außenfläche des Fahrzeugreifens, insbesondere einem Boden einer auf der Oberfläche des Reifens ausgebildeten flachen Vertiefung, gebildet ist.

Mittelwerte entsprechen in der Regel dem arithmetischen Mittelwert.

Hierdurch ist eine günstige Dimensionierung zugunsten der Herstellbarkeit erreicht. Besonders vorteilhaft ist es dabei, wenn mehrere, bevorzugt alle, Schraffurrippen eine entsprechende Höhe aufweisen. Die ersten Schraffurrippen und die zweiten Schraffurrippen können sich dabei in ihrer Höhe unterscheiden.

Eine vorteilhafte Ausführungsform ist dadurch gegeben, dass zumindest eine erste Schraffurrippe und/oder zumindest eine zweite Schraffurrippe eine Vielzahl an Kreuzungsbereichen aufweist.

Hierdurch ist der Kontrast weiter verstärkbar und gezielt beinflussbar. Eine Vielzahl ist mindestens 4.

Weist zumindest eine erste Schraffurrippe eine Vielzahl an Kreuzungsbereichen auf, so wird die zumindest eine erste Schraffurrippe von einer Vielzahl an zweiten Schraffurrippen in Kreuzungsbereichen gekreuzt und überlagert. Die lokalen Maxima der Kreuzungsbereiche sind entlang der Erstreckung der zumindest einen ersten Schraffurrippe angeordnet.

Weist zumindest eine zweite Schraffurrippe eine Vielzahl an Kreuzungsbereichen auf, so kreuzt und überlagert die zumindest eine zweite Schraffurrippe eine Vielzahl an ersten Schraffurrippen. Die lokalen Maxima der Kreuzungsbereiche sind entlang der Erstreckung der zumindest einen zweiten Schraffurrippe angeordnet.

Weisen zumindest eine erste Schraffurrippe und zumindest eine zweite Schraffurrippe eine Vielzahl an Kreuzungsbereichen auf, so ist eine bevorzugte Ausführungsform ein parallelogrammförmiges Gitter aus zueinander parallel angeordneten ersten Schraffurrippen und zueinander parallel angeordneten zweiten Schraffurrippen, die einander kreuzend angeordnet sind und wobei zumindest ein Teil der Gitterpunkte des parallelogrammförmigen Gitters als Kreuzungsbereich ausgebildet sind.

Erste Schraffurrippen können dabei jeweils weitgehend parallel zueinander angeordnet sein. Zusätzlich oder alternativ könne auch zweite Schraffurrippen weitgehend parallel zueinander angeordnet sein.

Weist eine erste Schraffurrippe oder eine zweite Schraffurrippe mehrere Kreuzungsbereiche auf, so kann sie zwischen den Kreuzungsbereichen unterbrochen sein.

Eine weitere vorteilhafte Ausführungsform ist dadurch gegeben, dass die erste Schraffurrippe und/oder die zweite Schraffurrippe zumindest eines Kreuzungsbereichs jeweils genau eine Schraffurrippe kreuzt.

Hierdurch ist der Gestaltungsspielraum weiter erhöht. Die jeweilige erste Schraffurrippe und/oder zweite Schraffurrippe kreuzt genau die andere Schraffurrippe des Kreuzungsbereichs. Sie weist somit keine weitere Kreuzung mit einer anderen Schraffurrippe auf. Die genau eine Kreuzung der jeweiligen Schraffurrippe ist dabei als Kreuzungsbereich ausgebildet. Die jeweilige Schraffurrippe endet somit in ihrer Längserstreckung in der Regel innerhalb der Kontraststrukturfläche und weist somit an ihren Enden zusätzliche quer zu den Flanken orientierte zusätzliche Flächen auf. Hierdurch ist der Kontrast weiter beinfluss- und verstärkbar.

Ein Ausführungsbeispiel besteht darin, dass zumindest eine erste Schraffurrippe von einer Vielzahl an zweiten Schraffurrippen in Kreuzungsbereichen gekreuzt wird, wobei die zweiten Schraffurrippe dabei jeweils genau die eine erste Schraffurrippe kreuzen. Eine derartige Struktur weist eine besonders vorteilhafte Kontrastwirkung auf, da die zweiten Schraffurrippen jeweils in ihrer Längserstreckung vom lokalen Maximum bis zum Schraffurgrund hin abfallen können.

Ein anderes Ausführungsbeispiel besteht darin, dass sowohl eine erste Schraffurrippe und eine zweite Schraffurrippe einen Kreuzungsbereich bilden, aber jeweils keine andere Schraffurrippe kreuzen. Hierdurch ergibt sich eine kleinteilige Struktur, die zur gezielten Beeinflussung der Kontrastwirkung über die Strukturfläche verteilbar ist.

Zweckmäßig ist es, wenn die ersten Schraffurrippen und/oder die zweiten Schraffurrippen parallel zueinander angeordnet sind. Hierdurch sind besonders gleichmäßige Kontrasteffekte erzielbar.

Eine vorteilhafte Ausführungsform ist auch dadurch gegeben, dass die Kontraststruktur eine Vielzahl an ersten Schraffurrippen und/oder eine Vielzahl an zweiten Schraffurrippen aufweist, die jeweils mit einem Abstand von 0,2 mm bis 1,0 mm, bevorzugt mit einem Abstand von 0,2 mm bis 0,5 mm, besonders bevorzugt mit einem Abstand von 0,25 mm bis 0,35 mm, weitgehend parallel zueinander angeordnet sind.

Ein solcher Abstand von 0,2 mm bis 1,0 mm, bevorzugt von 0,2 mm bis 0,5 mm, besonders bevorzugt von 0,25 mm bis 0,35 mm, ermöglicht eine verbesserte Kontrastwirkung bei gleichzeitig geringem Fertigungsaufwand. Der Abstand kann gemessen sein zwischen und senkrecht zu den Graten gemessen parallel zur flächigen Erstreckung der Kontraststrukturfläche .

Eine vorteilhafte Ausführungsform ist dadurch gegeben, dass parallel zueinander angeordnete erste Schraffurrippen und diese in Kreuzungsbereichen kreuzende parallel zueinander angeordnete zweite Schraffurrippen ein parallelogrammförmiges Gitter bilden und dass innerhalb einer der parallelogrammförmigen Flächen zumindest eine weitere Erhebung, bevorzugt eine faserförmige weitere Erhebung und/oder eine an eine der ersten Schraffurrippen oder an eine der zweiten Schraffurrippen angebundene weitere Erhebung, angeordnet ist.

Hierdurch ist die Dichte an zur flächigen Erstreckung der Kontraststrukturfläche ausgerichteten Flächen weiter vergrößerbar, wodurch der Kontrasteffekt weiter verstärkt ist. Eine Anbindung einer solchen weiteren Erhebung ermöglicht eine bessere Entlüftbarkeit in der Herstellung des Reifens.

Eine vorteilhafte Ausführungsform ist dadurch gegeben, dass zumindest eine der ersten Schraffurrippen einander gegenüberliegende Flanken aufweist, die einen Flankenwinkel von mindestens 50°, bevorzugt von 55° bis 65°, miteinander einschließen.

Solche Flankenwinkel zeigen eine gute Kontrastwirkung. Eine entsprechende Negativform eines Formwerkzeugs wie einer Vulkanisationsform kann beispielsweise mittels eins spanabtragenden Verfahrens oder Lasergravur geschaffen werden. Der Winkel kann gemessen sein zwischen den Kreuzungsbereichen. Besonders vorteilhaft ist es dabei, wenn die einander gegenüberliegenden Flanken einen derartigen Winkel über eine Höhenerstreckung aufweisen, die zumindest einem Viertel der Höhe der ersten Schraffurrippe entspricht.

Eine vorteilhafte Ausführungsform ist auch dadurch gegeben, dass zumindest eine der ersten Schraffurrippen und/oder zumindest eine der zweiten Schraffurrippen einander gegenüberliegende Flanken aufweist, die einen Flankenwinkel von 2° bis 10°, bevorzugt von 6° bis 8°, miteinander einschließen.

Durch einen derart steilen Flankenwinkel ist eine Mehrfachreflektion und damit eine verbesserte Kontrastwirkung erreichbar. Eine entsprechende Negativform eines Formwerkzeugs wie einer Vulkanisationsform kann mittels Lasergravur des Formwerkzeugs geschaffen werden. Der Winkel kann gemessen sein außerhalb des Kreuzungsbereichs, insbesondere zwischen zwei Kreuzungsbereichen. Besonders vorteilhaft ist es dabei, wenn die einander gegenüberliegenden Flanken einen derartigen Winkel über eine Höhenerstreckung aufweisen, die zumindest einem Viertel der Höhe der ersten Schraffurrippe entspricht.

In einer zweckmäßigen Ausführungsform weist die erste Schraffurrippe einander gegenüberliegende Flanken auf, die einen Winkel von mindestens 50° miteinander einschließen und die zweite Schraffurrippe des selben Kreuzungsbereichs weist einander gegenüberliegende Flanken auf, die einen Winkel von 2° bis 10°, bevorzugt von 6° bis 8°, miteinander einschließen.

In einer anderen zweckmäßigen Ausführungsform weist sowohl die erste Schraffurrippe als auch die zweite Schraffurrippe desselben Kreuzungsbereichs jeweils einander gegenüberliegende Flanken auf, die einen Winkel von 2° bis 10°, bevorzugt von 6° bis 8°, miteinander einschließen.

Eine vorteilhafte Ausführungsform ist dadurch gegeben, dass eine Längserstreckungsrichtung der ersten Schraffurrippe mit einer Längserstreckungsrichtung der zweiten Schraffurrippe zumindest eines Kreuzungsbereichs einen Winkel von 30° bis 90°, bevorzugt von 45° bis 90°, besonders bevorzugt von 60° bis 90°, miteinander einschließen.

Der Winkel beeinflusst die lokale Dichteverteilung an geneigten Flanken im Anschluss an den Kreuzungsbereich. Bei einem Winkel von kleiner als 30° ist jedoch die Entformung des Reifens erschwert. Ein Winkel von 45° bis 90° ermöglicht eine verbesserte Kontrastwirkung bei gleichzeitig guter Entformbarkeit. Die Entformbarkeit ist bei einem Winkel von 60° bis 90° weiter verbessert.

Unabhängig von der Ausführungsform kann die Kontraststrukturfläche einen Schraffurgrund aufweisen, der benachbarte erste Schraffurrippen und/oder benachbarte zweite Schraffurrippen mittels des Schraffurgrundes voneinander trennt.

Eine vorteilhafte Ausführungsform ist dadurch gegeben, dass der Fahrzeugreifen mehrere Kontraststrukturflächen aufweist, die derart angeordnet sind, dass sie einen maschinenlesbaren Code, bevorzugt einen zweidimensionalen Code, besonders bevorzugt einen QR-Code, darstellen.

Gemäß einer weiteren bevorzugten Ausführungsform weist der Fahrzeugreifen mehrere derartige Kontraststrukturflächen auf, die derart angeordnet sind, dass sie einen maschinenlesbaren Code, bevorzugt einen zweidimensionalen Code, besonders bevorzugt einen QR-Code, darstellen. Aufgrund der hervorragenden Kontrastwirkung der Kontraststrukturflächen eignet sich eine solche Anordnung hervorragend zur Darstellung eines maschinenlesbaren Codes, insbesondere zur Darstellung der üblicherweise dunkel dargestellten Flächen des Codes.

Eine vorteilhafte Ausführungsform ist dadurch gegeben, dass die Kontraststrukturfläche auf einer Seitenwand und/oder einem Laufstreifen ausgebildet ist, insbesondere bei einem Fahrzeugluftreifen.

In einer bevorzugten Ausführungsform ist die Kontraststrukturfläche auf einer der Seitenwände des Fahrzeugreifens ausgebildet. Hierdurch ist die Erkennbarkeit von Markierungen auf der Seitenwand verbesserbar.

Gemäß einer weiteren bevorzugten Ausführungsform ist die Kontraststrukturfläche am Laufstreifen des Fahrzeugreifens ausgebildet. Die Kontraststrukturfläche kann dabei insbesondere auch auf Rillenflanken und/oder Rillengründen von im Laufstreifen verlaufenden Rillen oder am Laufstreifenauslauf, also an den außerhalb der Bodenaufstandsfläche zu den Seitenwänden verlaufenden Schulterflanken, oder an der Außenfläche des Laufstreifens, also an mit dem Untergrund in Kontakt tretenden Lauffläche, angebracht sein.

Zweckmäßig ist es, wenn der Reifen ein Fahrzeugluftreifen ist. Es kann sich um einen Fahrzeugluftreifen für ein Fahrrad, für einen Personenkraftwagen, einen Van, ein SUV, einen Light-Truck, ein Nutzfahrzeug, ein Kraftrad oder einen Bus handeln. Besonders bevorzugt handelt es sich um einen Fahrzeugluftreifen für einen Personenkraftwagen. Derartige Fahrzeugluftreifen weisen in der Regel eine geringe Seitenwandhöhe auf. Hierdurch ist der Platz für die Anbringung von Zeichen wie Schrift oder bildliche Darstellungen in der Regel begrenzt. Für eine gute Lesbarkeit und/oder Erkennbarkeit ist somit eine hohe Kontrastwirkung besonders vorteilhaft. Der erfindungsgemäße Reifen kann aber auch ein Vollreifen sein.

Die Erfindung betrifft auch ein Verfahren zur Herstellung eines Formwerkzeugs einer Vulkanisationsvorrichtung zum formgebenden Vulkanisieren eines Fahrzeugreifens gemäß zumindest einem der vorhergehenden Ansprüche, wobei das Formwerkzeug auf einer Formoberfläche eine zur Kontraststruktur des Fahrzeugreifens komplementäre Negativkontraststruktur aufweist, wobei das Verfahren zumindest die folgenden Schritte in der dargelegten Reihenfolge aufweist:
a) Bereitstellen eines Formwerkzeugs aufweisend eine Formoberfläche;
b) Erzeugen einer ersten Schraffurrille auf der Formoberfläche des Formwerkzeugs durch Materialabtrag, wobei die erste Schraffurrille als zu einer ersten Schraffurrippe komplementäre Negativstruktur ausgebildet ist und einen zum Grat der ersten Schraffurrippe komplementären Rillengrund aufweist;
c) Erzeugen einer zweiten Schraffurrille auf der Formoberfläche des Formwerkzeugs, wobei die zweite Schraffurrille als zur zweiten Schraffurrippe der Kontraststruktur komplementäre Negativstruktur ausgebildet ist und wobei die zweite Schraffurrille den Rillengrund der ersten Schraffurrille in der Draufsicht kreuzt; wobei das Erzeugen der zweiten Schraffurrille durch Lasergravur durch Energieeintrag mittels eines Laserstrahls erfolgt und wobei der Energieeintrag auch im Bereich der zuvor in Schritt b) durch Materialabtrag erzeugten ersten Schraffurrille , insbesondere im Bereich des Rillengrundes.

Ein solches Verfahren ermöglicht eine einfache Herstellbarkeit eines Formwerkzeugs einer Vulkanisationsvorrichtung zur Erzeugung einer Kontraststrukturfläche aufweisend eine Kontraststruktur mit sich überlagernden Schraffurrippen. Wesentlich ist hierbei, dass Schritt c) erfolgt, nachdem in Schritt b) bereits die erste Schraffurrille erzeugt wurde. In Schritt c) erfolgt der Energieeintrag mittels des Laserstrahls somit auf der bereits in Schritt b) durch Materialabtrag abgesenkten Oberfläche des Formwerkzeugs. Im Bereich der bereits erzeugten ersten Schraffurrille, insbesondere im Bereich des Rillengrundes, wird somit die Formoberfläche in Schritt c) nochmals weiter abgesenkt. Hierdurch ist auf einfache Art und Weise ein Formwerkzeug zur Verfügung gestellt, das eine formgebende Vulkanisation eines erfindungsgemäßen Fahrzeugreifens ermöglicht. Die nachgelagerte Lasergravur in Schritt c) ermöglicht es, dass die zweite Schraffurrippe die Kontur der ersten Schraffurrippe im Kreuzungsbereich überlagert und dort auch ein lokales Maximum aufweist.

Bei einer Lasergravur wird ein von einem Laser erzeugter Laserstrahl auf eine zu gravierende Oberfläche gerichtet. Die Gravur erfolgt mittels des durch den Laserstrahl bedingten Energieeintrags auf die Oberfläche. Hierzu werden Laserstrahl und Oberfläche in der Regel relativ zueinander bewegt, so dass der Laserstrahl abhängig von der zu gravierenden Struktur über die Oberfläche geführt wird. Durch Anpassung der Geschwindigkeit dieser Relativbewegung sowie Parametern des Laserstrahls, wie z.B. Intensität und/oder Fokus des Laserstrahls, können die resultierende gravierte Struktur als auch die Gravurzeit optimiert werden. Es kann sich um einen kontinuierlichen oder um einen gepulsten Laser handeln.

Zur Erzeugung einer zweiten Schraffurrille kann der Laserstrahl entlang einer oder mehrerer linienförmiger Gravurstrecken über die Oberfläche des Formwerkzeugs geführt werden. Die mehreren linienförmigen Gravurstrecken sind dabei in der Regel benachbart und weitgehend parallel zueinander angeordnet. Hierdurch kann die Breite der zweiten Schraffurrille variabel gewählt werden. Der Laserstrahl kann auch mehrfach entlang derselben linienförmigen Gravurstrecke geführt werden. Hierdurch ist die Tiefe der ersten Quervertiefung einstellbar.

Eine einfache und kostengünstige Art des Materialabtrags in Schritt b) kann durch ein spanabtragendes Verfahren wie beispielsweise durch Fräsen mittels eines Fräskopfes erfolgen.

Der Materialabtrag in Schritt b) kann aber auch durch Lasergravur erfolgen. Vorteilhaft hieran ist, dass Schritt b) und Schritt c) mit dem gleichen Laser oder zumindest an der gleichen Produktionsmaschine erzeugt werden können.

Eine vorteilhafte Ausführungsform ist dabei dadurch gegeben, dass in Schritt c) der Laserstrahl zur Erzeugung der zweiten Schraffurrille entlang zumindest einer linienförmigen Gravurstrecke geführt wird und dass der Laserstrahl dabei mit konstanter Geschwindigkeit und/oder konstanter Intensität des Laserstrahls entlang der jeweiligen zumindest einen linienförmigen Gravurstrecke geführt wird.

Eine bevorzugte Ausführungsform des Verfahrens ist dadurch gegeben, dass in Schritt c) der Laserstrahl zur Erzeugung der zweiten Schraffurrille entlang zumindest einer linienförmigen Gravurstrecke geführt wird und dass der Laserstrahl dabei mit konstanter Geschwindigkeit und/oder konstanter Intensität des Laserstrahls entlang der jeweiligen zumindest einen linienförmigen Gravurstrecke geführt wird.

Dies ermöglicht eine besonders einfache Fertigung der Negativform der überlagernden zweiten Schraffurrippe, da die Steuerung des Laserstrahls nicht exakt auf die Position der Kreuzung der Gravurstrecke mit dem Rillengrund abgestimmt werden muss.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 einen Fahrzeugluftreifen aufweisend eine Kontraststrukturfläche ;
Fig. 2 einen Kreuzungsbereich einer Kontraststruktur;
Fig. 3 eine Draufsicht auf einen Kreuzungsbereich;
Fig. 4 bis 6 Beispiele für Anordnungen von Kreuzungsbereichen;
Fig. 7 und 8 je eine Draufsicht auf ein Formwerkzeug.

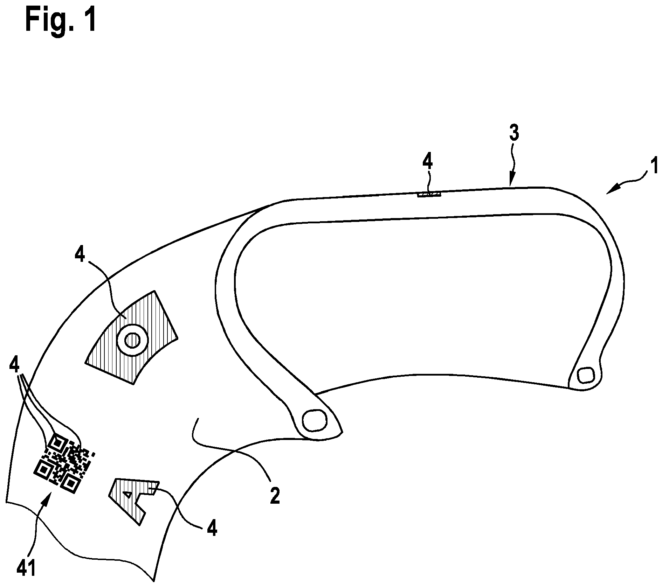

Die Figur 1 zeigt einen Fahrzeugreifen 1 mit Seitenwänden 2 und einem Laufstreifen 3 und mit zumindest einer Kontraststrukturfläche 4 auf seiner äußeren Oberfläche, insbesondere auf zumindest einer der Seitenwände 2 und/oder dem Laufstreifen 3. Bei einer Anordnung am Laufstreifen 3 kann die Kontraststrukturfläche 4 dabei insbesondere auch auf Rillenflanken und/oder Rillengründen von im Laufstreifen 3 verlaufenden Rillen oder am Laufstreifenauslauf, also an den außerhalb der Bodenaufstandsfläche zu den Seitenwänden verlaufenden Schulterflanken, oder an der Außenfläche des Laufstreifens, also an mit dem Untergrund in Kontakt tretenden Lauffläche, angebracht sein. Beispielhaft handelt es sich um einen Fahrzeugluftreifen.

Wie dargestellt eignet sich die erfindungsgemäße Kontraststrukturflächen 4 hervorragend zur Darstellung Markierung, indem sie diese ganz oder teilweise bildet oder indem sie diese ganz oder teilweise umgibt. Die Kontraststrukturfläche 4 eignet sich dabei auch zur Darstellung eines Codes 41, insbesondere eines zweidimensionalen Codes wie beispielsweise eines QR-Codes. Hierbei können die üblicherweise dunkel dargestellten Flächen des Codes durch eine erfindungsgemäße Kontraststrukturfläche 4 gebildet sein.

Auf der Kontraststrukturfläche 4 ist eine Kontraststruktur 5 mit Schraffurrippen 6,7 jeweils aufweisend einen Grat 8,9 sowie einander gegenüberliegende Flanken 10 ausgebildet. Dabei weist die Kontraststruktur 5 Kreuzungsbereiche 11 auf, wobei ein Kreuzungsbereich 11 genau der Bereich ist, in dem eine zweite Schraffurrippe 7 der Schraffurrippen 6,7 eine erste Schraffurrippe 6 der Schraffurrippen 6,7 so überlagernd kreuzend angeordnet ist, dass sich der Grat 9 der zweiten Schraffurrippe 7 und der Grat 8 der ersten Schraffurrippe 6 in der Draufsicht kreuzen und wobei eine Kontur der zweiten Schraffurrippe 7 innerhalb des Kreuzungsbereichs 11 ein lokales Maximum 12 aufweist.

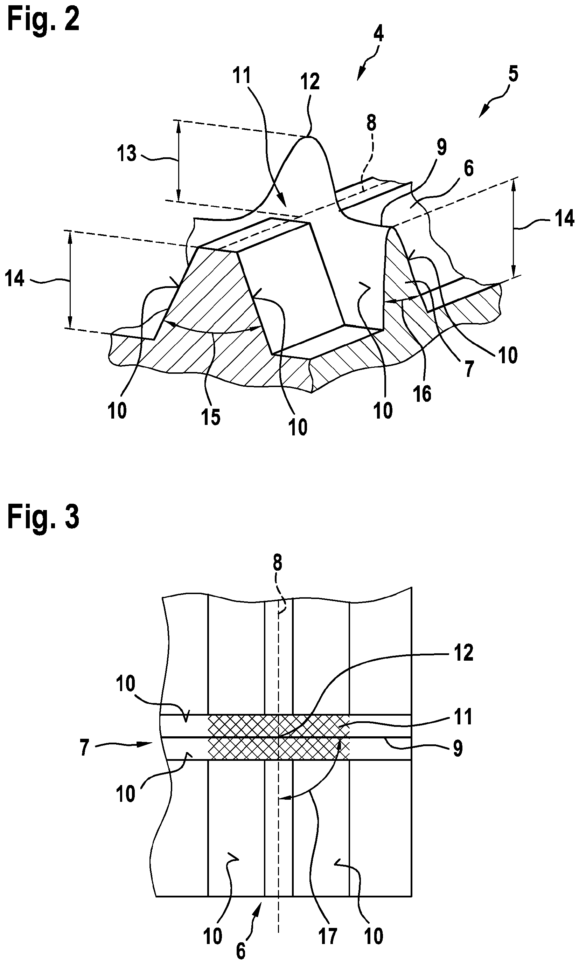

Ein Anschnitt durch eine derartige Kontraststruktur 5 mit einem gezeigten Kreuzungsbereich 11 ist in der Fig. 2 dargestellt. Die Fig. 3 zeigt eine Draufsicht auf den in der Fig. 2 dargestellten Ausschnitt. Der Kreuzungsbereich 11 ist dabei schraffiert dargestellt.

In dem Kreuzungsbereich 11 kann die zweite Schraffurrippe 7 einer Kontur der ersten Schraffurrippe 6 weitgehend folgen.

Weiter kann in dem Kreuzungsbereich 11 das lokale Maximum 12 den Grat 8 der ersten Schraffurrippe 6 um eine Überlagerungshöhe 13 von 0,05 mm bis 0,4 mm, bevorzugt 0,1 mm bis 0,4 mm, besonders bevorzugt 0,2 mm bis 0,3 mm, überlagern.

Außerhalb des Kreuzungsbereichs 11 kann die erste Schraffurrippe 6 und/oder die zweite Schraffurrippe 7 eine Höhe 14 von 0,1 mm bis 1,0 mm, bevorzugt von 0,2 mm bis 0,8 mm, besonders bevorzugt von 0,25 mm bis 0,5 mm, aufweisen. Wie dargestellt können sich die Höhen 14 der beiden sich im Kreuzungsbereich 11 kreuzenden Schraffurrippen 6,7 voneinander unterscheiden. In den Figuren dargestellt ist die Höhe H gemessen relativ zum Schraffurgrund.

Die erste Schraffurrippe 6 kann einander gegenüberliegende Flanken 10 aufweist, die einen Flankenwinkel 15 von mindestens 50°, bevorzugt von 55° bis 65°, miteinander einschließen. Die zweite Schraffurrippe 7 kann einander gegenüberliegende Flanken 10 aufweist, die einen Flankenwinkel 16 von 2° bis 10°, bevorzugt von 6° bis 8°, miteinander einschließen. Es können aber auch die erste Schraffurrippe 6 und die zweite Schraffurrippe 7 beide einen Flankenwinkel 15, 16 von 2° bis 10°, bevorzugt von 6° bis 8°, miteinander einschließen.

Wie in der Fig. 3 für einen Winkel 17 von 90° verdeutlicht, kann eine Längserstreckungsrichtung der ersten Schraffurrippe 6 mit einer Längserstreckungsrichtung der zweiten Schraffurrippe 7 einen Winkel 17 von 30° bis 90°, bevorzugt von 45° bis 90°, besonders bevorzugt von 60° bis 90°, miteinander einschließen.

Die Kontraststruktur 5 weist dabei mehrere Kreuzungsbereiche 11 auf. Bevorzugt sind dabei mehrere, besonders bevorzugt alle, Kreuzungsbereiche 11 weitgehend gleich ausgebildet. Die Kreuzungsbereiche können sich aber, insbesondere in ihrer Überlagerungshöhe 13, voneinander unterscheiden.

Entsprechend weist die Kontraststruktur 5 mehrere erste Schraffurrippen 6 und/oder zweite Schraffurrippen 7 auf. Erste Schraffurrippen 6 oder zweite Schraffurrippen 7 können dabei jeweils weitgehend parallel zueinander ausgerichtet sein.

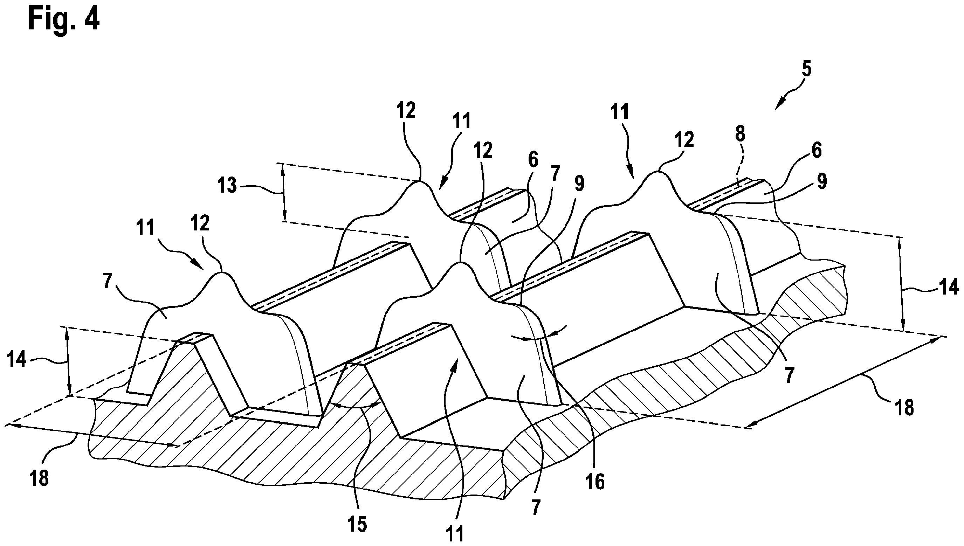

Die Figuren 4 bis 6 zeigen Beispiele für Anordnungen von Kreuzungsbereichen 11 einer Kontraststruktur 5 eines erfindungsgemäßen Fahrzeugreifens 1. Die Kontraststrukturen 5 eignen sich dabei hervorragend für den in der Fig. 1 dargestellten Fahrzeugluftreifen 1. Die einzelnen Kreuzungsbereiche 11 können dabei wie bzgl. der Figuren 2 und 3 beschrieben ausgebildet sein.

Die Fig. 4 zeigt eine Kontraststruktur 5, in der eine Vielzahl an weitgehend parallel zueinander angeordneten ersten Schraffurrippen 6 jeweils eine Vielzahl an Kreuzungsbereichen 11 aufweisen. Gezeigt sind zwei erste Schraffurrippen 6 mit jeweils zwei Kreuzungsbereichen 11. Die zweiten Schraffurrippen 7 sind jeweils parallel zueinander angeordnet. Jede zweite Schraffurrippe 7 der Kreuzungsbereiche 11 kreuzt jeweils genau eine erste Schraffurrippe 6. Die ersten Schraffurrippen 6 und/oder die zweiten Schraffurrippen 7 sind jeweils mit einem Abstand 18 von 0,2 mm bis 1,0 mm, bevorzugt mit einem Abstand von 0,2 mm bis 0,5 mm, besonders bevorzugt mit einem Abstand von 0,25 mm bis 0,35 mm, zueinander angeordnet. Im Gegensatz zu dem in der Fig. 2 gezeigten Kreuzungsbereich weisen die zweiten Schraffurrippen 7 exemplarisch eine größere Höhe 14 auf als die ersten Schraffurrippen 6.

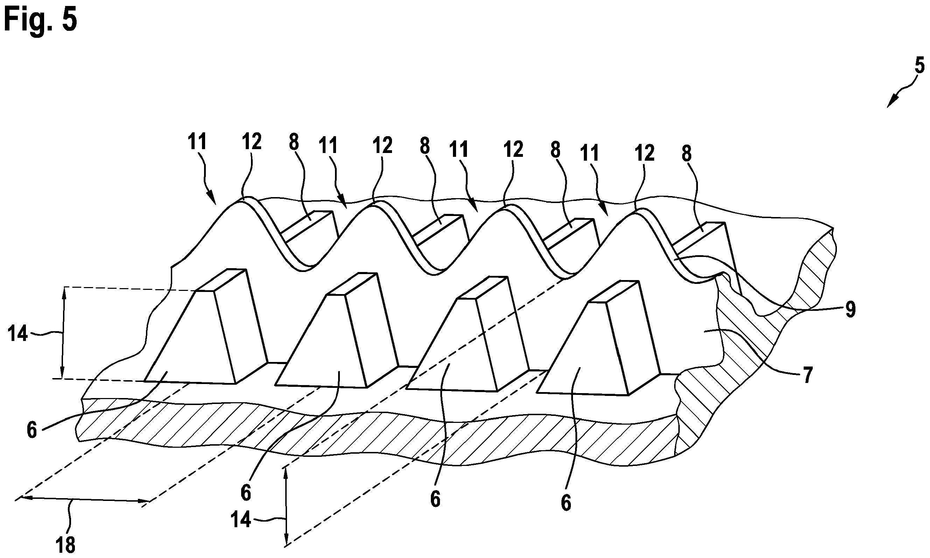

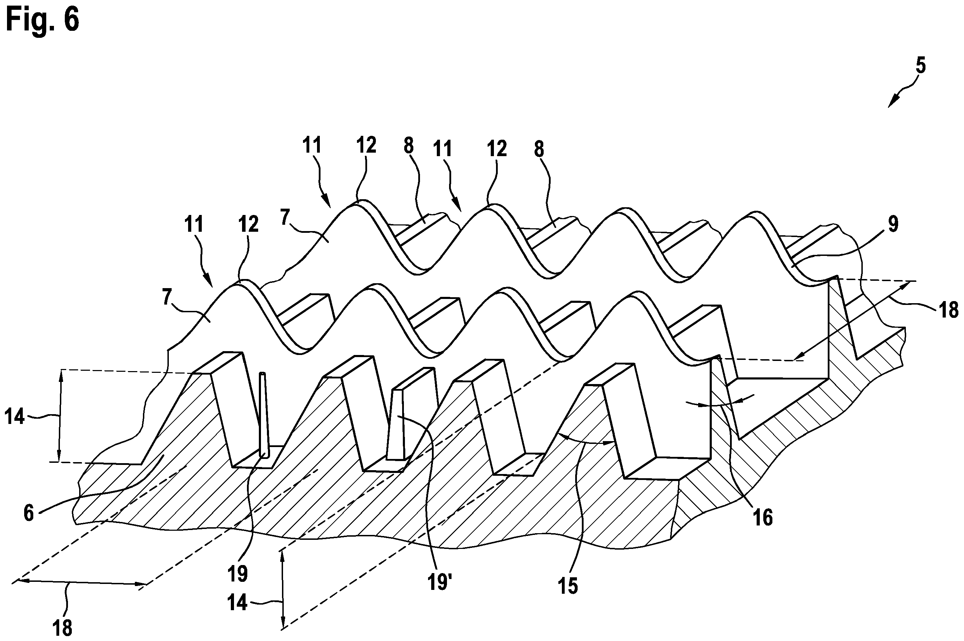

Die Fig. 5 zeigt einen Ausschnitt einer Kontraststruktur 5, in der eine zweite Schraffurrippe 7 eine Vielzahl an ersten Schraffurrippen 7 in Kreuzungsbereichen 11 kreuzt. Die ersten Schraffurrippen7 kreuzen dabei genau die gezeigte zweite Schraffurrippe 7. Die Kontraststruktur 5 weist bevorzugt eine Vielzahl an derartigen Strukturen auf, wobei die zweiten Schraffurrippen 7 bevorzugt parallel zueinander angeordnet sind. Die ersten Schraffurrippen 6 und/oder die zweiten Schraffurrippen 7 sind jeweils mit einem Abstand 18 von 0,2 mm bis 1,0 mm, bevorzugt mit einem Abstand von 0,2 mm bis 0,5 mm, besonders bevorzugt mit einem Abstand von 0,25 mm bis 0,35 mm, zueinander angeordnet. Die Fig. 6 zeigt einen Ausschnitt einer Kontraststruktur 5, in der sowohl eine Vielzahl an ersten Schraffurrippen 6 und eine Vielzahl an zweiten Schraffurrippen 7 jeweils eine Vielzahl an Kreuzungsbereichen 11 aufweisen. Die ersten Schraffurrippen 6 und zweiten Schraffurrippen 7 sind dabei jeweils parallel zueinander ein parallelogrammförmiges Gitter ergebend angeordnet. Zumindest ein Teil der Gitterpunkte des Gitters sind als erfindungsgemäße Kreuzungsbereiche 11 ausgebildet. Eine Längserstreckungsrichtung der ersten Schraffurrippen kann 6 mit einer Längserstreckungsrichtung der zweiten Schraffurrippen 7 einen Winkel 17 von 30° bis 90°, bevorzugt von 45° bis 90°, besonders bevorzugt von 60° bis 90°, miteinander einschließen. Exemplarisch ist gezeigt, dass innerhalb einer der parallelogrammförmigen Flächen zumindest eine weitere Erhebung 19, 19', bevorzugt eine faserförmige weitere Erhebung 19 und/oder eine an eine der ersten Schraffurrippen 6 oder an eine der zweiten Schraffurrippen 7 angebundene weitere Erhebung 19', angeordnet sein kann. Es können mehrere oder alle parallelogrammförmigen Flächen mit einer derartigen weiteren Erhebung 19, 19' ausgebildet sein. Es kann aber auch keine der Flächen eine weitere Erhebung aufweisen. Die Höhe 14 der zweiten Schraffurrippen 7 kann die minimale Höhe zwischen zwei Kreuzungsbereichen sein.

Die in den Figuren dargestellten Kontraststrukturen 5 können mittels eines Formwerkzeugs einer Vulkanisationsvorrichtung zum formgebenden Vulkanisieren eines Fahrzeugreifens 1 in die Oberfläche des Fahrzeugreifens 1, insbesondere in die Seitenwand 2 und/oder in den Laufstreifen 3, geprägt werden. Das Formwerkzeug weist dabei auf einer Formoberfläche eine zur Kontraststruktur 5 des Fahrzeugreifens 1 komplementäre Negativkontraststruktur 50 auf. Das Verfahren zur Herstellung des Formwerkzeugs umfasst dabei zumindest die folgenden Schritte in der dargelegten Reihenfolge:
a) Bereitstellen eines Formwerkzeugs 40 aufweisend eine Formoberfläche;
b) Erzeugen einer ersten Schraffurrille 60 auf der Formoberfläche des Formwerkzeugs durch Materialabtrag, wobei die erste Schraffurrille 60 als zu einer ersten Schraffurrippe 6 komplementäre Negativstruktur ausgebildet ist und einen zum Grat 8 der ersten Schraffurrippe 6 komplementären Rillengrund 80 aufweist;
c) Erzeugen einer zweiten Schraffurrille 70 auf der Formoberfläche des Formwerkzeugs 40, wobei die zweite Schraffurrille 70 als zur zweiten Schraffurrippe 7 der Kontraststruktur 5 komplementäre Negativstruktur ausgebildet ist und wobei die zweite Schraffurrille 70 den Rillengrund 80 der ersten Schraffurrille 60 in der Draufsicht kreuzt; wobei das Erzeugen der zweiten Schraffurrille 70 durch Lasergravur durch Energieeintrag mittels eines Laserstrahls erfolgt und wobei der Energieeintrag auch im Bereich der zuvor in Schritt b durch Materialabtrag erzeugten ersten Schraffurrille 60 , insbesondere im Bereich des Rillengrundes 80, erfolgt.

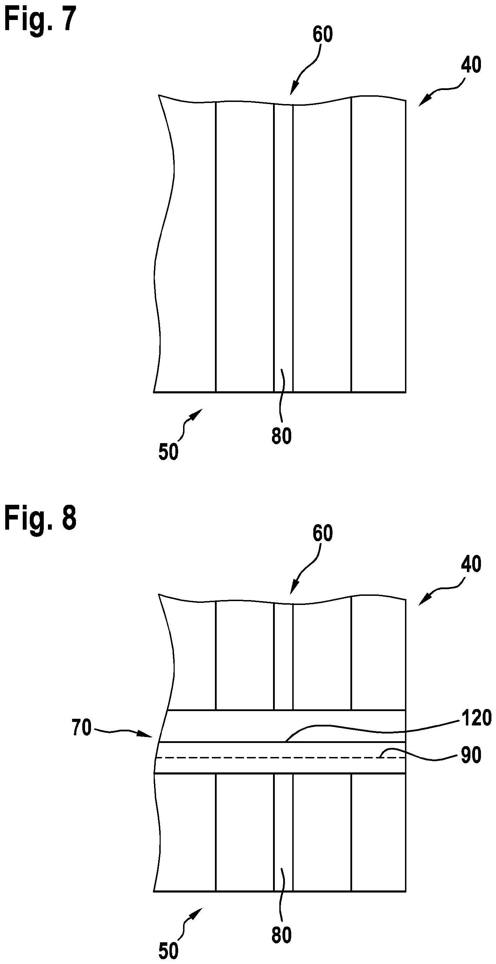

Die Figuren 7 und 8 zeigen eine Draufsicht auf ein Formwerkzeug 40 zur Erzeugung des in den Figuren 2 und 3 dargestellten Kreuzungsbereichs 11. Die Fig. 7 zeigt das Formwerkzeug 40 zwischen Schritt b und c. Die Fig. 8 zeigt das gleiche Formwerkzeug nach Schritt c. Der Materialabtrag in Schritt c erfolgt dabei auch im Bereich der zuvor in Schritt b durch Materialabtrag erzeugten ersten Schraffurrille 60, insbesondere im Bereich des Rillengrundes 80. Hierdurch ergibt sich ein lokales Minimum 120 im Kreuzungsbereich, welches als eine komplementäre Negativstruktur zu dem lokalen Maximum 12 ausgebildet ist. Gezeigt ist auch eine linienförmige Gravurstrecke 90, entlang der Laserstrahl zur Erzeugung der zweiten Schraffurrille 70 in Schritt c geführt wurde. Bevorzugt wurde der Laserstrahl dabei mit konstanter Geschwindigkeit und/oder konstanter Intensität entlang der jeweiligen zumindest einen linienförmigen Gravurstrecke 90 geführt.

### Bezugszeichenliste

- 1: Fahrzeugluftreifen
- 2: Seitenwand
- 3: Laufstreifen
- 4: Kontraststrukturfläche
- 41: zweidimensionaler Code
- 5: Kontraststruktur
- 6: erste Schraffurrippe
- 7: zweite Schraffurrippe
- 8: Grat der ersten Schraffurrippe
- 9: Grat der zweiten Schraffurrippe
- 10: Flanken
- 11: Kreuzungsbereich
- 12: lokales Maximum
- 13: Überlagerungshöhe
- 14: Höhe
- 15: Flankenwinkel erste Schraffurrippe
- 16: Flankenwinkel zweite Schraffurrippe
- 17: Winkel
- 18: Abstand
- 19, 19': weitere Erhebung
- 40: Formwerkzeug
- 50: Negativkontraststruktur
- 60: erste Schraffurrille
- 70: zweite Schraffurrille
- 80: Rillengrund
- 90: linienförmige Gravurstrecke
- 120: lokales Minimum

## Patentansprüche

1. Fahrzeugreifen (1) mit Seitenwänden (2) und einem Laufstreifen (3) und mit zumindest einer Kontraststrukturfläche (4) auf einer äußeren Oberfläche (2,3), insbesondere auf einer der Seitenwände (2) und/oder dem Laufstreifen (3), wobei auf der Kontraststrukturfläche (4) eine Kontraststruktur (5) mit Schraffurrippen (6,7) jeweils aufweisend einen Grat (8,9) sowie einander gegenüberliegende Flanken (10) ausgebildet ist,
**dadurch gekennzeichnet, dass**
die Kontraststruktur (5) Kreuzungsbereiche (11) aufweist, wobei ein Kreuzungsbereich (11) genau der Bereich ist, in dem eine zweite Schraffurrippe (7) der Schraffurrippen (6,7) eine erste Schraffurrippe (6) der Schraffurrippen (6,7) so überlagernd kreuzend angeordnet ist, dass sich der Grat (9) der zweiten Schraffurrippe (7) und der Grat (8) der ersten Schraffurrippe (6) in der Draufsicht kreuzen und dass eine Kontur der zweiten Schraffurrippe (7) innerhalb des Kreuzungsbereichs (11) ein lokales Maximum (12) aufweist.

2. Fahrzeugreifen (1) gemäß zumindest einem der vorhergehenden Ansprüche,
**dadurch gekennzeichnet, dass** in zumindest einem Kreuzungsbereich (11) das lokale Maximum (12) den Grat (8) der ersten Schraffurrippe (6) um eine Überlagerungshöhe (13) von 0,05 mm bis 0,4 mm, bevorzugt 0,1 mm bis 0,4 mm, besonders bevorzugt 0,2 mm bis 0,3 mm, überragt.

3. Fahrzeugreifen (1) gemäß zumindest einem der vorhergehenden Ansprüche,
**dadurch gekennzeichnet, dass** die erste Schraffurrippe (6) und/oder die zweite Schraffurrippe (7) zumindest eines Kreuzungsbereichs (11) außerhalb des Kreuzungsbereichs (11) eine Höhe (14) von 0,1 mm bis 1,0 mm, bevorzugt von 0,2 mm bis 0,8 mm, besonders bevorzugt von 0,25 mm bis 0,5 mm, aufweist.

4. Fahrzeugreifen (1) gemäß zumindest einem der vorhergehenden Ansprüche,
**dadurch gekennzeichnet, dass** zumindest eine erste Schraffurrippe (6) und/oder zumindest eine zweite Schraffurrippe (7) eine Vielzahl an Kreuzungsbereichen (11) aufweist.

5. Fahrzeugreifen (1) gemäß zumindest einem der vorhergehenden Ansprüche,
**dadurch gekennzeichnet, dass** die erste Schraffurrippe (6) und/oder die zweite Schraffurrippe (7) zumindest eines Kreuzungsbereichs (11) jeweils genau eine Schraffurrippe kreuzt.

6. Fahrzeugreifen (1) gemäß zumindest einem der vorhergehenden Ansprüche,
**dadurch gekennzeichnet, dass** die Kontraststruktur (5) eine Vielzahl an ersten Schraffurrippen (6) und/oder eine Vielzahl an zweiten Schraffurrippen (7) aufweist, die jeweils mit einem Abstand (18) von 0,2 mm bis 1,0 mm, bevorzugt mit einem Abstand von 0,2 mm bis 0,5 mm, besonders bevorzugt mit einem Abstand von 0,25 mm bis 0,35 mm, weitgehend parallel zueinander angeordnet sind.

7. Fahrzeugreifen (1) gemäß zumindest einem der vorhergehenden Ansprüche,
**dadurch gekennzeichnet, dass** parallel zueinander angeordnete erste Schraffurrippen (6) und diese in Kreuzungsbereichen (11) kreuzende parallel zueinander angeordnete zweite Schraffurrippen (7) ein parallelogrammförmiges Gitter bilden und dass innerhalb einer der parallelogrammförmigen Flächen zumindest eine weitere Erhebung (19, 19'), bevorzugt eine faserförmige weitere Erhebung (19) und/oder eine an eine der ersten Schraffurrippen (6) oder an eine der zweiten Schraffurrippen (7) angebundene weitere Erhebung (19'), angeordnet ist.

8. Fahrzeugreifen (1) gemäß zumindest einem der vorhergehenden Ansprüche,
**dadurch gekennzeichnet, dass** zumindest eine der ersten Schraffurrippen (6) einander gegenüberliegende Flanken (10) aufweist, die einen Flankenwinkel (15) von mindestens 50°, bevorzugt von 55° bis 65°, miteinander einschließen.

9. Fahrzeugreifen (1) gemäß zumindest einem der vorhergehenden Ansprüche,
**dadurch gekennzeichnet, dass** zumindest eine der ersten Schraffurrippen (6) und/oder zumindest eine der zweiten Schraffurrippen (7) einander gegenüberliegende Flanken (10) aufweist, die einen Flankenwinkel (15,16) von 2° bis 10°, bevorzugt von 6° bis 8°, miteinander einschließen.

10. Fahrzeugreifen (1) gemäß zumindest einem der vorhergehenden Ansprüche, **dadurch gekennzeichnet, dass** eine Längserstreckungsrichtung der ersten Schraffurrippe (6) mit einer Längserstreckungsrichtung der zweiten Schraffurrippe (7) zumindest eines Kreuzungsbereichs (11) einen Winkel (17) von 30° bis 90°, bevorzugt von 45° bis 90°, besonders bevorzugt von 60° bis 90°, miteinander einschließen.

11. Fahrzeugreifen (1) gemäß zumindest einem der vorhergehenden Ansprüche, **dadurch gekennzeichnet, dass** der Fahrzeugreifen (1) mehrere Kontraststrukturflächen (4) aufweist, die derart angeordnet sind, dass sie einen maschinenlesbaren Code (41), bevorzugt einen zweidimensionalen Code, besonders bevorzugt einen QR-Code (41), darstellen.

12. Fahrzeugreifen (1), bevorzugt Fahrzeugluftreifen (1), gemäß zumindest einem der vorhergehenden Ansprüche, **dadurch gekennzeichnet, dass** die Kontraststrukturfläche (4) auf einer Seitenwand (2) und/oder einem Laufstreifen (3) ausgebildet ist.

13. Verfahren zur Herstellung eines Formwerkzeugs einer Vulkanisationsvorrichtung zum formgebenden Vulkanisieren eines Fahrzeugreifens (1) gemäß zumindest einem der vorhergehenden Ansprüche, wobei das Formwerkzeug auf einer Formoberfläche eine zur Kontraststruktur (5) des Fahrzeugreifens (1) komplementäre Negativkontraststruktur aufweist, wobei das Verfahren zumindest die folgenden Schritte in der dargelegten Reihenfolge aufweist:
a) Bereitstellen eines Formwerkzeugs (40) aufweisend eine Formoberfläche;
b) Erzeugen einer ersten Schraffurrille (60) auf der Formoberfläche des Formwerkzeugs durch Materialabtrag, wobei die erste Schraffurrille (60) als zu einer ersten Schraffurrippe (6) komplementäre Negativstruktur ausgebildet ist und einen zum Grat (8) der ersten Schraffurrippe (6) komplementären Rillengrund (80) aufweist;
**c)** Erzeugen einer zweiten Schraffurrille (70) auf der Formoberfläche des Formwerkzeugs (40), wobei die zweite Schraffurrille (70) als zur zweiten Schraffurrippe (7) der Kontraststruktur (5) komplementäre Negativstruktur ausgebildet ist und wobei die zweite Schraffurrille (70) den Rillengrund (80) der ersten Schraffurrille (60) in der Draufsicht kreuzt; wobei das Erzeugen der zweiten Schraffurrille (70) durch Lasergravur durch Energieeintrag mittels eines Laserstrahls erfolgt und wobei der Energieeintrag auch im Bereich der zuvor in Schritt b) durch Materialabtrag erzeugten ersten Schraffurrille (60), insbesondere im Bereich des Rillengrundes (80), **erfolgt.**

14. Verfahren gemäß Anspruch 13, **dadurch gekennzeichnet, dass** in Schritt c) der Laserstrahl zur Erzeugung der zweiten Schraffurrille (70) entlang zumindest einer linienförmigen Gravurstrecke (90) geführt wird und dass der Laserstrahl dabei mit konstanter Geschwindigkeit und/oder konstanter Intensität des Laserstrahls entlang der jeweiligen zumindest einen linienförmigen Gravurstrecke (90) geführt wird.

## Claims

1. Vehicle tyre (1) having side walls (2) and a tread (3) and having at least one contrasting structure area (4) on an outer surface (2, 3), in particular on one of the side walls (2) and/or the tread (3), wherein a contrasting structure (5) with hatching ribs (6, 7) each having a ridge (8, 9) and oppositely situated flanks (10) is formed on the contrasting structure area (4),
**characterized in that**
the contrasting structure (5) has crossing regions (11), wherein a crossing region (11) is precisely the region in which a second hatching rib (7) of the hatching ribs (6, 7) is arranged straddling and crossing a first hatching rib (6) of the hatching ribs (6, 7) in such a way that the ridge (9) of the second hatching rib (7) and the ridge (8) of the first hatching rib (6) cross in a plan view and that a contour of the second hatching rib (7) has a local maximum (12) within the crossing region (11).

2. Vehicle tyre (1) according to at least one of the preceding claims, **characterized in that** the local maximum (12) projects beyond the ridge (8) of the first hatching rib (6) by a straddling height (13) of 0.05 mm to 0.4 mm, preferably 0.1 mm to 0.4 mm, particularly preferably 0.2 mm to 0.3 mm, in at least one crossing region (11).

3. Vehicle tyre (1) according to at least either of the preceding claims, **characterized in that** the first hatching rib (6) and/or the second hatching rib (7) of at least one crossing region (11) has a height (14) of 0.1 mm to 1.0 mm, preferably of 0.2 mm to 0.8 mm, particularly preferably of 0.25 mm to 0.5 mm, outside the crossing region (11).

4. Vehicle tyre (1) according to at least one of the preceding claims, **characterized in that** at least one first hatching rib (6) and/or at least one second hatching rib (7) has a multiplicity of crossing regions (11).

5. Vehicle tyre (1) according to at least one of the preceding claims, **characterized in that** the first hatching rib (6) and/or the second hatching rib (7) of at least one crossing region (11) crosses precisely one respective hatching rib.

6. Vehicle tyre (1) according to at least one of the preceding claims, **characterized in that** the contrasting structure (5) has a multiplicity of first hatching ribs (6) and/or a multiplicity of second hatching ribs (7), which are arranged largely parallel to one another, in each case at a spacing (18) of 0.2 mm to 1.0 mm, preferably at a spacing of 0.2 mm to 0.5 mm, particularly preferably at a spacing of 0.25 mm to 0.35 mm.

7. Vehicle tyre (1) according to at least one of the preceding claims, **characterized in that** first hatching ribs (6) arranged parallel to one another and second hatching ribs (7) arranged parallel to one another and crossing said first hatching ribs in crossing regions (11) form a parallelogram-shaped grid, and **in that** at least one further elevation (19, 19'), preferably a further elevation (19) in the form of a fibre and/or a further elevation (19') attached to one of the first hatching ribs (6) or to one of the second hatching ribs (7), is arranged within one of the parallelogram-shaped areas.

8. Vehicle tyre (1) according to at least one of the preceding claims, **characterized in that** at least one of the first hatching ribs (6) has oppositely situated flanks (10), which form a flank angle (15) of at least 50°, preferably of 55° to 60°, with one another.

9. Vehicle tyre (1) according to at least one of the preceding claims, **characterized in that** at least one of the first hatching ribs (6) and/or at least one of the second hatching ribs (7) has oppositely situated flanks (10), which form a flank angle (15, 16) of 2° to 10°, preferably of 6° to 8°, with one another.

10. Vehicle tyre (1) according to at least one of the preceding claims, **characterized in that** a direction of longitudinal extent of the first hatching rib (6) and a direction of longitudinal extent of the second hatching rib (7) of at least one crossing region (11) form an angle (17) of 30° to 90°, preferably of 45° to 90°, particularly preferably of 60° to 90°, with one another.

11. Vehicle tyre (1) according to at least one of the preceding claims, **characterized in that** the vehicle tyre (1) has multiple contrasting structure areas (4) arranged in such a way that they represent a machine-readable code (41), preferably a two-dimensional code, particularly preferably a QR code (41).

12. Vehicle tyre (1), preferably pneumatic vehicle tyre (1), according to at least one of the preceding claims, **characterized in that** the contrasting structure area (4) is formed on a side wall (2) and/or a tread (3).

13. Method for producing a moulding tool of a vulcanization device for the moulding vulcanization of a vehicle tyre (1) according to at least one of the preceding claims, wherein the moulding tool has a negative contrasting structure, complementing the contrasting structure (5) of the vehicle tyre (1), on a moulding surface, wherein the method comprises at least the following steps in the stated sequence:
a) providing a moulding tool (40) having a moulding surface;
b) creating a first hatching groove (60) on the moulding surface of the moulding tool by material removal, wherein the first hatching groove (60) is in the form of a negative structure complementing a first hatching rib (6) and has a groove base (80) complementing the ridge (8) of the first hatching rib (6),
c) creating a second hatching groove (70) on the moulding surface of the moulding tool (40), wherein the second hatching groove (70) is in the form of a negative structure complementing the second hatching rib (7) of the contrasting structure (5), and wherein the second hatching groove (70) crosses the groove base (80) of the first hatching groove (60) in a plan view; wherein the second hatching groove (70) is created by laser engraving as a result of the input of energy by means of a laser beam, and wherein the input of energy is also created in the region of the first hatching groove (60) created previously in step b) by material removal, in particular in the region of the groove base (80).

14. Method according to Claim 13, **characterized in that**, in step c), the laser beam is guided along at least one linear engraving path (90) for the purpose of creating the second hatching groove (70), and **in that** in the process the laser beam is guided along the respective at least one linear engraving path (90) at a constant speed and/or constant intensity of the laser beam.

## Revendications

1. Pneumatique de véhicule (1) comportant des flancs (2) et une bande de roulement (3) et pourvu d'au moins une surface à structure de contraste (4) sur une surface extérieure (2, 3), en particulier sur l'un des flancs (2) et/ou sur la bande de roulement (3), une structure de contraste (5) qui comporte des rainures de hachurage (6, 7) pourvues chacune d'une arête (8, 9) ainsi que de flancs opposés (10) étant formée sur la surface à structure de contraste (4),
**caractérisé en ce que**
la structure de contraste (5) comporte des zones de croisement (11), une zone de croisement (11) étant précisément la zone dans laquelle une deuxième rainure de hachurage (7) des rainures de hachurage (6, 7) est disposée de manière croisée et à recouvrir une première rainure de hachurage (6) des rainures de hachurage (6, 7) de sorte que l'arête (9) de la deuxième rainure de hachurage (7) et l'arête (8) de la première rainure de hachurage (6) se croisent en vue de dessus et qu'un contour de la deuxième rainure de hachurage (7) présente un maximum local (12) à l'intérieur de la zone de croisement (11).

2. Pneumatique de véhicule (1) selon l'une au moins des revendications précédentes, **caractérisé en ce que** dans au moins une zone de croisement (11), le maximum local (12) fait saillie de l'arête (8) de la première rainure de hachurage (6) d'une hauteur de recouvrement (13) de 0,05 mm à 0,4 mm, de préférence de 0,1 mm à 0,4 mm, de manière particulièrement préférée de 0,2 mm à 0,3 mm.

3. Pneumatique de véhicule (1) selon l'une au moins des revendications précédentes, **caractérisé en ce que** la première rainure de hachurage (6) et/ou la deuxième rainure de hachurage (7) d'au moins une zone de croisement (11) ont à l'extérieur de la zone de croisement (11) une hauteur (14) de 0,1 mm à 1,0 mm, de préférence de 0,2 mm à 0,8 mm, de manière particulièrement préférée de 0,25 mm à 0,5 mm.

4. Pneumatique de véhicule (1) selon l'une au moins des revendications précédentes, **caractérisé en ce qu'**au moins une première rainure de hachurage (6) et/ou au moins une deuxième rainure de hachurage (7) comportent un grand nombre de zones de croisement (11).

5. Pneumatique de véhicule (1) selon l'une au moins des revendications précédentes, **caractérisé en ce que** la première rainure de hachurage (6) et/ou la deuxième rainure de hachurage (7) d'au moins une zone de croisement (11) croisent chacune exactement une rainure de hachurage.

6. Pneumatique de véhicule (1) selon l'une au moins des revendications précédentes, **caractérisé en ce que** la structure de contraste (5) comporte un grand nombre de premières rainures de hachurage (6) et/ou un grand nombre de deuxièmes rainures de hachurage (7) qui sont disposées dans une large mesure parallèlement les unes aux autres à chaque fois à une distance (18) de 0,2 mm à 1,0 mm, de préférence à une distance de 0,2 mm à 0,5 mm, de manière particulièrement préférée à une distance de 0,25 mm à 0,35 mm.

7. Pneumatique de véhicule (1) selon l'une au moins des revendications précédentes, **caractérisé en ce que** des premières rainures de hachurage (6) disposées parallèlement les unes aux autres et des deuxièmes rainures de hachurage (7) disposées parallèlement les unes aux autres et croisant celles-ci dans des zones de croisement (11) forment une grille en forme de parallélogramme et **en ce qu'**au moins une autre élévation (19, 19'), de préférence une autre élévation fibreuse (19) et/ou une autre élévation (19') reliée à l'une des premières rainures de hachurage (6) ou à l'une des deuxièmes rainures de hachurage (7) est disposée dans l'une des surfaces en forme de parallélogramme.

8. Pneumatique de véhicule (1) selon l'une au moins des revendications précédentes, **caractérisé en ce qu'**au moins une des premières rainures de hachurage (6) comporte des flancs opposés (10) qui forment entre eux un angle de flanc (15) d'au moins 50°, de préférence de 55° à 65°.

9. Pneumatique de véhicule (1) selon l'une au moins des revendications précédentes, **caractérisé en ce qu'**au moins une des premières rainures de hachurage (6) et/ou au moins une des deuxièmes rainures de hachurage (7) comportent des flancs opposés (10) qui forment entre eux un angle de flanc (15, 16) de 2° à 10°, de préférence de 6° à 8°.

10. Pneumatique de véhicule (1) selon l'une au moins des revendications précédentes, **caractérisé en ce qu'**une direction d'extension longitudinale de la première rainure de hachurage (6) et une direction d'extension longitudinale de la deuxième rainure de hachurage (7) d'au moins une zone de croisement (11) forment entre elles un angle (17) de 30° à 90°, de préférence de 45° à 90°, de manière particulièrement préférée de 60° à 90°.

11. Pneumatique de véhicule (1) selon l'une au moins des revendications précédentes, **caractérisé en ce que** le pneumatique de véhicule (1) comporte une pluralité de surfaces à structure de contraste (4) qui sont agencées de manière à représenter un code (41) lisible par machine, de préférence un code bidimensionnel, de manière particulièrement préférée un code QR (41).

12. Pneumatique de véhicule (1), de préférence pneumatique de véhicule (1) selon l'une au moins des revendications précédentes, **caractérisé en ce que** la surface à structure de contraste (4) est formée sur un flanc (2) et/ou une bande de roulement (3).

13. Procédé de réalisation d'un outil de moulage d'un dispositif de vulcanisation destiné à la mise en forme par vulcanisation d'un pneumatique de véhicule (1) selon l'une au moins des revendications précédentes, l'outil de moulage comportant sur une surface de moulage une structure de contraste négatif complémentaire de la structure de contraste (5) du pneumatique de véhicule (1), le procédé comprenant au moins les étapes suivantes dans l'ordre présenté :
a) fournir un outil de moulage (40) pourvu d'une surface de moulage ;
b) générer une première rainure de hachurage (60) sur la surface de moulage de l'outil de moulage par enlèvement de matière, la première rainure de hachurage (60) étant conçue comme une structure négative complémentaire d'une première rainure de hachurage (6) et comportant un fond de rainure (80) complémentaire de l'arête (8) de la première rainure de hachurage (6) ;
c) générer une deuxième rainure de hachurage (70) sur la surface de moulage de l'outil de moulage (40), la deuxième rainure de hachurage (70) étant conçue comme une structure négative complémentaire de la deuxième rainure de hachurage (7) de la structure de contraste (5) et la deuxième rainure de hachurage (70) croisant le fond de rainure (80) de la première rainure de hachurage (60) en vue en plan ; la génération de la deuxième rainure de hachurage (70) étant effectuée par gravure laser par apport d'énergie au moyen d'un faisceau laser et l'apport d'énergie étant également effectuée au niveau de la première rainure de hachurage (60) préalablement générée par enlèvement de matière à l'étape b), notamment dans la zone du fond de rainure (80).

14. Procédé selon la revendication 13, **caractérisé en ce qu'**à l'étape c) le faisceau laser est guidé le long d'au moins un chemin de gravure linéaire (90) afin de générer la deuxième rainure de hachurage (70) et **en ce que** le faisceau laser est guidé le long de l'au moins un chemin de gravure linéaire (90) respectif, le faisceau laser ayant une vitesse constante et/ou une intensité constante.
